# EUROPÄISCHE PATENTSCHRIFT

(11) **EP 1 232 850 B1**
(45) Veröffentlichungstag und Bekanntmachung des Hinweises auf die Patenterteilung: **07.05.2008**
(21) Anmeldenummer: 02003546.5
(22) Anmeldetag: 15.02.2002
(51) Int. Cl.: B29C 65/74, B29C 65/08, B65B 51/22

(54) **Verfahren und Vorrichtung zum Ausbilden und/oder Verschliessen einer Verpackungseinheit**
Process and apparatus for shaping and/or sealing of a packaging unit
Procédé et appareil pour le formage et/ou la fermeture d'un unité d'emballage

(30) Priorität: 15.02.2001 DE 20102801 U; 11.05.2001 DE 20107938 U
(43) Veröffentlichungstag der Anmeldung: 21.08.2002
(73) Patentinhaber: GREIF-VELOX Maschinenfabrik GmbH, 23560 Lübeck (DE)
(72) Erfinder: Tillack, Bernd, 23936 Grevesmühlen (DE); Dietrich, Norbert, 35773 Hennef (DE); Dreier, Hans Bernd, 33378 Rheda-Wiedenbrück (DE)
(74) Vertreter: Grünecker, Kinkeldey, Stockmair & Schwanhäusser Anwaltssozietät

(56) Entgegenhaltungen:
- EP-A- 0 046 150
- EP-A- 0 187 689
- EP-A- 0 967 151
- DE-A- 3 104 968
- DE-A- 3 941 015
- DE-A- 4 126 557
- DE-A- 4 233 878
- DE-C- 3 400 154
- FR-A- 1 461 900
- US-A- 3 254 402
- US-A- 3 697 357
- US-A- 4 157 719
- US-A- 4 363 205
- US-A- 4 517 790
- US-A- 5 110 040
- US-A- 5 437 141
- DATABASE WPI Section Ch, Week 197420 Derwent Publications Ltd., London, GB; Class A35, AN 1974-37645V XP002177486 -& JP 49 016547 B (BROTHER IND CO LTD), 23 April 1974 (1974-04-23)
- "VERSCHLIESSEN MIT ULTRASCHALL BEFUELL- UND VERSCHLUSSSTATION FUER SCHUETTGUETER" VERFAHRENSTECHNIK, MAINZ, DE, vol. 34, no. 12, 2000, pages 12-13, XP001025642
- PATENT ABSTRACTS OF JAPAN vol. 1999, no. 09, 30 July 1999 (1999-07-30) -& JP 11 104216 A (UEDA ABUANSE KK), 20 April 1999 (1999-04-20)

## Beschreibung

Die vorliegende Erfindung betrifft eine Vorrichtung zum Ausbilden einer aus einem Endlosschlauch gebildeten Verpackungseinheit oder zum Verschließen einer vorkonfektionierten Verpackungseinheit, insbesondere eines Schüttgutsackes mit einer Ultraschall-Schweißeinrichtung umfassend einen Amboss und eine Sonotrode, die aufeinander zu beweglich sind, und einer Einrichtung zum Positionieren des zu verschweißenden Schlauchmaterials zwischen Amboss und der Sonotrode. Die vorliegende Erfindung betrifft ferner ein Verfahren zum Ausbilden und/oder Verschließen einer Verpackungseinheit.

Aus der EP 0 187 689 A1 ist ein Verfahren zum Herstellen von Ventilsacken bekannt, welches die Ventilsäcke durch Ultraschallschweißen verschließt.

Eine gattungsbildende Vorrichtung sowie ein Verfahren werden in dem Artikel "Verschließen mit Ultraschall" der Anmelderin der vorliegenden Schutzrechtsanmeldung in Verfahrenstechnik 34 (2000), Nr. 12, Seite 12-13 beschrieben. Hier werden verschiedene Ultraschweißeinrichtungen beschrieben, beispielsweise um einen auf einen Füllstutzen zunächst aufgeschobenen, mit einem Schüttgut befüllten Ventilsack, der nachfolgend von dem Füllstutzen abgeschoben wird, im Bereich seines Ventils zu verschweißen. Diese Ventilsäcke sind vorkonfektionierte Verpackungseinheiten und werden in der vorstehend beschriebenen Vorrichtung verschlossen.

Aus der US-A-4,363,205 ist ein Verfahren bekannt, bei dem ein Endlosschlauch durch mehrere Schweißnähte zu einer geschlossenen Verpackungseinheit ausgebildet wird und der Endlosschlauch unmittelbar benachbart zu einer der Schweißnähten abgetrennt wird.

Aus der US-A-4,517,790 ist ein Verfahren zum Ausbilden einer aus einem Endlosschlauch gebildeten Verpackungseinheit bekannt. In diesem Verfahren wird eine Folie von einer Rolle abgewickelt und um einen Kragen geführt, mit dem die Folie zu einem Schlauch geformt wird. Die einander überlappenden Längsseiten des endlos zugeführten Folienmaterials werden zu einem Schlauch verschweißt. Dieser Schlauch wird von oben mit schüttfähigem Gut befüllt. Eine unterhalb des Kragens angeordnete Schweißeinrichtung verschließt den in der Befüllung befindlichen Schlauchabschnitt. Diese als Ultraschall-Schweißeinrichtung ausgebildete Schweißeinrichtung verschließt gleichzeitig auch das obere Ende der zuvor gefüllten Verpackungseinheit. Zwischen den unteren und oberen Schweißbacken dieser Schweißeinheit befindet sich ein relativ zu den beiden Schweißbacken bewegliches Schneidmesser, so dass im Anschluss an das Anschluss an das Ausbilden einer Schweißnaht die untere vollständig geschlossene Verpackungseinheit von dem oben noch offenen Schlauch getrennt werden kann. Zwischen den Anlageflächen der oberen und unteren Schweißbacke und dem Messer ist ein Freiraum vorgesehen, der ein Hindurchtreten des Messers durch den Endlosschlauch erlaubt. Folglich verbleibt nach dem Trennen von Endlosschlauch und geschlossener Verpackungseinheit ein der Schweißnaht vorgelagertes Endstück, welches unverschlossen ist.

Die FR-A-1 461 900 offenbart ein Verfahren zum Verschließen einer vorkonfektionierten Verpackungseinheit, bei dem die Verpackungseinheit zumindest einseitig mittels einer Ultraschweißeinrichtun verschlossen wird. Das von der Schweißnaht abstehende Material der Verpackungseinheit wird dabei in der Schweißnaht durch Einbringen eines konventionellen Messers in die Schweißnaht abgetrennt.

Aus der DE 41 26 557 A ist schließlich ein Verfahren zum Herstellen von Verpackung einheiten mittels Ultraschweißen bekannt. Die die Verpackungseinheit bildenden Behälterbeutel werden bei dem Verfahren gefüllt und mittels Ultraschallschweißen verschlossen. Die Ultra-Schweißeinrichtun wird aber nicht nur zum Verschließen des Behälterbeutels, sondern auch zum Abtrennen eines von dem geschlossenen Behälterbeutel abstehenden Materials genutzt. Bei dem vorbekannten Verfahren werden zunächst der Amboss und die Sonotrode mit relativ geringer Anpresskraft gegeneinander gelegt. Durch einen Ultraschall-Impuls wird die Schweißnaht erzeugt. Ausschließend wird der wie eine Schneide ausgebildete Amboss mit höherer Anpresskraft gegen die Sonotrode gedrückt, um das abstehende Material von der Schweißnaht abzutrennen.

Eine Ultraschweißeinrichtung ist aber auch bekannt zum Ausbilden einer aus einem Endlosschlauch gebildeten Verpackungseinrichtung. In dem sogenannten FFS-Verfahren (Form-Füll-Seal) wird ein Seiten- oder ein Flachfaltenschlauch von einer Rolle abgewickelt. Ein vorbestimmtes Längenstück wird von dem zugeführten Endlosmaterial abgetrennt und an der Trennstelle durch konventionelles Verschweißen verschlossen. Der derart hergestellte, oben offene Schüttgutsack wird zunächst in eine Zwischenablage abgelegt. Hier kühlt die Schweißnaht ab, um die für das spätere Befüllen des Schüttgutsackes erforderliche Festigkeit zu erzielen. Von der Zwischenablage wird der vorbereitete Schüttgutsack dann gegriffen und mit der Öffnung nach oben unter einer Fülleinrichtung angeordnet. Nach dem Verfüllen wird das Material des Schüttgutsackes auch an seiner Oberseite verschweißt. Hierzu ist aus dem vorgenannten Stand der Technik eine Ultra-Schweißeinrichtung vorgesehen.

Nachteilig bei dieser vorbekannten Vorrichtung für das FFS-Verfahren ist zum einen das Erfordernis einer Zwischenablage. Zum anderen hat der nach dem FFS-Verfahren hergestellte Schüttgutsack zumindest an seiner Unterseite einen die untere Schweißnaht endseitig überragenden Längenabschnitt des Schlauchmaterials. Ziel des Verfahrens sollte es sein, aus dem endlos zugeführten Schlauchmaterial möglichst viele Schüttgutsäcke herzustellen.

Bei der vorstehend beschriebenen Vorrichtung zum Verschließen eines Ventilsackes nach Abschieben von dem Ventilstutzen besteht das Problem, dass an der Innenseite des Ventils Partikel anheften können, beispielsweise Pigmente oder toxische Partikel. Diejenigen Partikel, welche zwischen dem freien Ende des abstehenden Ventils und der Schweißnaht befindlich sind, können bei der späteren Handhabung abstauben. Dies kann bei toxischen Stoffen nicht erwünscht sein. Abstaubende Farbpigmente führen bereits zu einer sehr intensiven Durchfärbung der Umgebung, was gleichfalls nicht gewünscht ist.

Der vorliegenden Erfindung liegt die Aufgabe zugrunde, eine Vorrichtung der eingangs genannten Art anzugeben, bei der die vorstehend beschriebenen Probleme nicht existieren. So soll beispielsweise für das sogenannte FFS-Verfahren eine Vorrichtung angegeben werden, mit welcher das zugeführte Endlosmaterial zur Herstellung der Stückgutsäcke bestmöglich ausgenutzt wird. Auch soll das Abstauben von an dem Ventil anhaftenden Partikeln vermieden werden. Der vorliegenden Erfindung liegt somit insbesondere die Aufgabe zugrunde, die eingangs genannte Vorrichtung dahingehend weiterzubilden, dass mit dieser Verpackungseinheiten herstellbar sind, bei denen möglichst kein Längenabschnitt von der Schweißnaht endseitig absteht.

Der vorliegenden Erfindung liegt ferner die Aufgabe zugrunde, ein Verfahren anzugeben, bei welcher zugeführtes Endlosmaterial zur Herstellung von Verpackungseinheiten bestmöglich ausgenutzt wird. Ferner soll das Verfahren ein Abstauben von an der verschlossenen Verpackungseinheit anhaftenden Partikeln vermieden werden.

Zur Lösung des vorrichtungsmäßigen Problems wird die eingangs genannte Vorrichtung mit der vorliegenden Erfindung dadurch weitergebildet, dass der Amboss zwei gegeneinander in Richtung auf die Sonotrode bewegliche Ambossteile umfasst, von denen das eine Ambossteil als Verschließamboss und das andere Teil als Trennamboss ausgebildet ist.

Mit der erfindungsgemäßen Vorrichtung wird ein Verschließen und gleichzeitiges Abtrennen unmittelbar in bzw. benachbart zu der mittels Ultraschweißen hergestellten Schweißnaht möglich. Die Vorrichtung zum Verschließen, insbesondere eines Ventilsackes schneidet das von dem Ventilsack abstehende freie Ende über den Trennamboss in bzw. direkt neben der mittels Ultraschweißen hergestellten Schweißnaht ab. An demnach außen offenen Reststück des Ventilstutzens anhaftende Verunreinigungen, werden damit bereits an der Befüllstation mit dem abstehenden Endstück entfernt, beispielsweise abgesogen.

Bei der Ausbildung von Verpackungseinheiten, insbesondere Schüttgutsäcken nach dem FFS-Verfahren wird mit der erfindungsgemäßen Vorrichtung das zugeführte Endlosmaterial bestmöglich ausgenutzt. Das untere Ende des Schüttgutsackes wird durch die Schweißnaht gebildet. Von der Schweißnaht steht nach unten kein Längenabschnitt des Schlauchmaterials ab.

Zur konstruktiven Vereinfachung der erfindungsgemäßen Vorrichtung wird mit einer bevorzugten Weiterbildung vorgeschlagen, dass die beiden Ambossteile im wesentlichen als plattenförmige Bauteile ausgebildet sind und dass die Ambossteile mit ihren benachbarten Längsseiten aneinander liegen. Die Führung der Relativbewegung beider Ambossteile erfolgt damit vorzugsweise über die benachbarten Längsseiten.

Eine saubere und zuverlässige Trennung des abstehenden Ventilstücks bzw. ein Abtrennen des vorbestimmten Längenstücks zur Ausbildung eines Offensackes von dem endlos zugeführten Schlauch wird dadurch begünstigt, dass der Trennamboss in Richtung auf die Sonotrode spitz zulaufend ausgebildet ist.

Es hat sich insbesondere bei der Verwendung von Seitenfaltenschläuchen zur Herstellung von Verpackungseinheiten bzw. zum Verschließen von Ventilsäcken als vorteilhaft herausgestellt, an dem Verschließamboss eine sich parallel zu der Stirnseite der Sontrode erstreckend Druckfläche auszubilden, welche von sich diagonal kreuzenden Nuten durchsetzt ist. Bei Seitenfaltenschläuchen besteht das Problem, dass an den Rändern des Schlauches jeweils vier Lagen miteinander verschweißt werden müssen, wohingegen in der Mitte lediglich zwei Lagen miteinander verschweißt werden müssen. Insbesondere an dem Übergang von dem zweilagigen zu dem vierlagigen Bereich soll das Material der Verpackungseinheit, welches zumindest im Bereich der Schweißnaht, vorzugsweise Kunststoff ist, hinreichend fließen können, um die Wandstärkenunterscheide auszugleichen. Dies wird vorzugsweise durch Nuten bewirkt, welche auf der Druckfläche sich diagonal kreuzend ausgeformt sind. Die Dimensionierung und die Tiefe der Nuten sind von der Materialstärke und der Beschaffenheit der Verpackungseinheit abhängig. Mit größeren Wandstärken werden die Nuten tiefer.

Zur Vereinfachung der erfindungsgemäßen Vorrichtung wird vorgeschlagen, zumindest den Verschweißamboss als sich über die gesamte Schweißlänge erstreckendes einteiliges Bauteil auszubilden. Es hat sich überraschender Weise gezeigt, dass auch bei dem FFS-Verfahren ein Seitenfaltenschlauch über seine gesamte Breite mit einer derartig einfach ausgebildeten Vorrichtung zuverlässig verschlossen werden kann.

Das Klemmen des zu verschließenden Materials vor dem Verschweißen und nachfolgendem Abtrennen wird dadurch weiter begünstigt, dass sowohl die Sonotrode als auch der Amboss aufeinander zu beweglich sind.

Zum Verschließen von Ventilsäcken im Bereich ihres Ventils nach der Befüllung ist es im Hinblick auf ein möglichst gutes Erscheinungsbild der Säcke zu bevorzugen, die Ultraschweißeinrichtung gemäß Anspruch 7 auszubilden. Hierbei ist die Ultraschweißeinrichtung in Abschiebrichtung des Sackes derart vor dem vorderen Ende des Füllstutzens anzuordnen, dass das von dem Ventilsack seitlich abstehende Ventil jedenfalls auf der Höhe der dem Ventilstutzen benachbart angeordneten Längsseite des Ventilsackes verschweißt und das freie abstehende Ende des Ventilsackes abgetrennt wird. Bei dieser bevorzugten Ausgestaltung der erfindungsgemäßen Vorrichtung wird die Schweißnaht für das Ventil etwa in einer Ebene mit der von dem Ventil vor dem Befüllen überragten Längsseite erzeugt. Auch das freie Ende des Ventils, welches unmittelbar benachbart zu der Schweißnaht liegt, befindet sich etwa in der vorgenannten Ebene. Der derart hergestellte verschlossene Ventilsack weist damit in der Seitenansicht eine rechteckige Kontur auf, was insbesondere beim Stapeln der verschlossenen Säcke und späteren Umhüllen einer Vielzahl von gestapelten Säcken mittels Wickeln, Stretchen oder Schrumpfen zu bevorzugen ist.

Zur Lösung des verfahrensmäßigen Problems wird mit der vorliegenden Erfindung das beispielsweise aus dem vorgenannten Artikel "Verschließen mit Ultraschall" bekannte Verfahren dahingehend weitergebildet, dass das von der Schweißnaht abstehende Material des Endlosschlauches oder der Verpackungseinheit unmittelbar benachbart zu oder in der Schweißnaht abgetrennt wird. Im Sinne der vorliegenden Erfindung bedeutet "unmittelbar benachbart zu der Schweißnaht", dass das abstehende Material direkt am Rand der Schweißnaht abgetrennt wird. Somit werden sämtliche, von der Schweißnaht abstehende Flächen, an denen eventuell abstaubendes Material des Schüttgutes anhaften kann, beim Abtrennen des abstehenden Materials entfernt. Es kann dementsprechend kein Material von der an sich geschlossenen Verpackungseinheit abstauben.

Sofern die Trennung in der Schweißnaht erfolgt, wird beispielsweise das schlauchförmige Reststück des Ventils einseitig verschlossen, wodurch auch die Gefahr des Abstaubens von Partikeln von diesem abgetrennten Teil des Ventilsackes verringert wird. Es ist beispielsweise denkbar, bei hoch toxischen oder sehr farbintensiven Pigmenten das abstehende Ende einerseits im Bereich der Schweißnaht zu der Verpackungseinheit durch Abtrennen in der Schweißnaht zu versiegeln und ferner das vordere, äußere und zuerst auf den Füllstutzen aufgeschobene Ende des Ventils über andere wirksame Maßnahmen, beispielsweise eine Ultraschallverschweißung zu verschließen, und zwar möglichst vor dem Abtrennen des abstehenden Materials. Es wird somit ein beiderseits geschlossener Schlauchabschnitt des Ventils von der Verpackungseinheit abgetrennt. Weder von dem geschlossenen Ventilsack noch von dem abgetrennten Reststück können bei dieser bevorzugten Ausgestaltung Partikel abstauben.

Sofern das erfindungsgemäße Verfahren zum Ausbilden von Verpackungseinheiten aus Endlosschlauch Anwendung findet, wird das hierzu zyklisch und in gleichen Längenabschnitten zur Ausbildung von Verpackungseinheiten gleicher Größe zugeführte Endlosmaterial bestmöglich genutzt. Ein von der Schweißnaht nach außen abstehender Rand entfällt, sofern das abstehende Material unmittelbar benachbart zu der Schweißnaht abgetrennt wird. Die derart geschaffene Trennstelle bildet die Öffnung für die in dem nächsten Schritt von dem Endlosschlauch abgetrennte Verpackungseinheit. Auch bei der Ausbildung von Verpackungseinheiten aus zugeführtem Endlosschlauch ist es möglich, das abstehende Material in der Schweißnaht abzutrennen. Bei dieser bevorzugten Ausführungsform werden beim Verschweißen des Endlosmaterials an der einen Stelle zwei Verpackungseinheiten zumindest einseitig verschlossen. Hierdurch wird der Ausstoß an vorbereiteten Verpackungseinheiten erhöht.

Bei dem erfindungsgemäßen Verfahren wird das abstehende Material mittels eines Ultraschallimpulses abgetrennt. Es hat sich überraschenderweise herausgestellt, dass bei einem Abtrennen mittels Ultraschweißen das doppellagig liegende Material der Verpackungseinheit durchtrennt werden kann, ohne die beiden Lagen derart miteinander zu verbinden, dass ein nachfolgendes Auseinanderspreizen der Lagen zur nachfolgenden Füllung der Verpackungseinheit unmöglich gemacht wird. Im Gegensatz zu beweglichen Klingen muss ein zum Abtrennen mittels Ultraschall zum Einsatz kommender Trennamboss nicht in regelmäßigen Abständen nachgeschliffen werden.

Im Hinblick auf eine möglichst einfache Steuerung der Ultraschalleinrichtung wird bei dem erfindungsgemäßen Verfahren, sowohl für das Verschweißen als auch für das Abtrennen eine gemeinsame Sonotrode als Teil der Ultraschalleinrichtung verwendet, wohingegen beim Trennen ein Trennamboss und beim Verschweißen ein Verschließamboss unter Zwischenlage des Materials gegen die Sonotrode gedrückt wird.

Sofern das erfindungsgemäße Verfahren zum Verschließen von vorkonfektionierten Verpackungseinheiten genutzt wird, die durch einen Ventilsack gebildet sind, kann gemäß einer weiteren bevorzugten Ausgestaltung eine zipfelfreie Umfangsfläche ausgebildet werden, sofern das den Ventilsack seitlich überragende Ventil an einer Stelle abgeschnitten wird, die auf oder in Richtung auf den Ventilsack hinter einer an die Längsseite des aufrecht stehenden Sackes angelegten Vertikalen liegt. Beim Stand der Technik wird das abstehende Ventil an einer Stelle abgeschnitten, die außerhalb einer Umhüllenden an die gefüllten Seitenflächen des aufrecht stehenden Ventilsackes liegt. Der an dem Ventilsack verbleibende Rest des Ventils überragt daher den geschlossenen Ventilsack zipfelförmig. Bei einem maschinellen Transport über Transportbänder besteht daher die Möglichkeit, dass der verbleibende Rest des Ventils geklemmt wird und einreißt, schlimmstenfalls von dem Ventilsack abgerissen wird. Darüber hinaus erweist sich der abstehende Rest des Ventils problematisch beim Überziehen von Schrumpf- oder Stretchhauben über einen Stückgutstapel, der aus einer Vielzahl von verschlossenen Ventilsäcken gebildet wird. Die Reststücke der Ventile überragen mitunter die Außenfläche derartiger Verpackungsstapel und bilden relativ scharfe Kanten, an denen die zu überziehende Schrumpf- bzw. Stretchhaube reißt.

Bei dem erfindungsgemäßen Verfahren liegt die Trennstelle zum Abtrennen des abstehenden Ventils und/oder innerhalb einer an die Längsseite des aufrecht stehenden Sackes angelegten Vertikalen und dementsprechend wird bei der bevorzugten Ausgestaltung des erfindungsgemäßen Verfahrens eine geschlossene Verpackungseinheit gebildet, deren Hüllfläche ausschließlich durch die gefüllten Seitenflächen des Ventilsackes gebildet wird. Derart gebildete Verpackungseinheit lässt sich problemlos maschinell fördern und kann zu einem Stückgutstapel aufgestapelt werden, der eine glatte Oberfläche hat.

Weitere Einzelheiten, Vorteile und Merkmale der vorliegenden Erfindung ergeben sich aus der nachfolgenden Beschreibung eines Ausführungsbeispiels in Verbindung mit der Zeichnung. In dieser zeigen:
- Figur 1a: ein Ausführungsbeispiel einer Ultraschall-Schweißeinrichtung als Teil einer Vorrichtung zum Ausbilden und/oder Verschließen eines Schüttgutsackes in einer ersten Stellung;
- Figur 1b: die in Figur 1a gezeigte Ultraschall-Schweißeinrichtung in einer zweiten Stellung;
- Figur 2: eine Draufsicht auf den Amboss des in Figur 1 gezeigten Ausführungsbeispiels; und
- Figur 3: eine Seitenansicht eines mit dem erfindungsgemäßen Verfahren verschlossenen Ventilsackes.

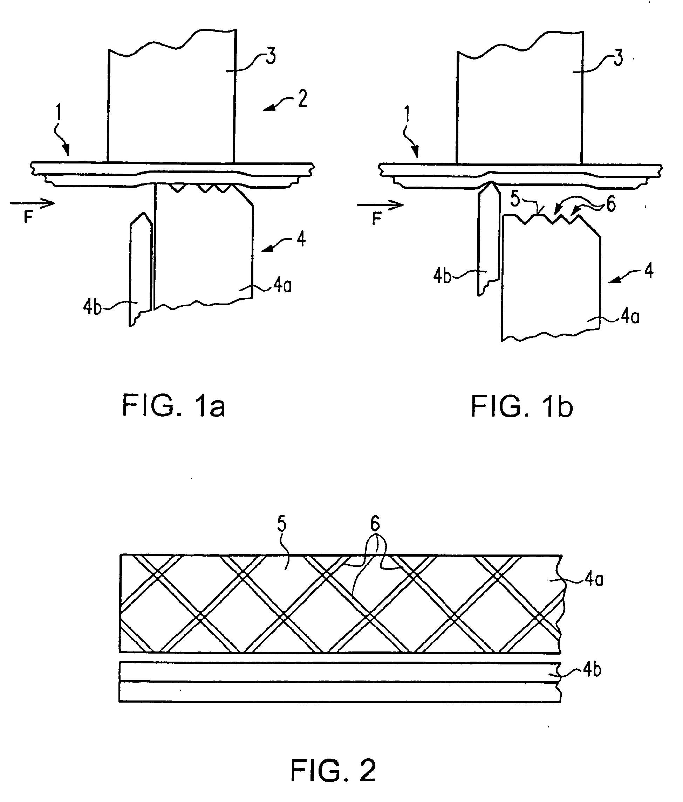

In Figur 1 ist ein Endlosschlauch 1 gezeigt, der von einer nicht dargestellten Spule abgewickelt und einer Ultraschall-Schweißeinrichtung 2 zugeführt wird. In der Ansicht gemäß Figur 1a links neben der Ultraschall-Schweißeinrichtung 2 befindet sich der von der Spule abgewickelte Seitenfaltenschlauch als Endlosmaterial. Rechts von der Ultraschall-Schweißeinrichtung 2 befindet sich eine vorbestimmte Länge des Seitenfaltenschlauches 1. Diese vorbestimmte Länge wird in der Figur 1 gezeigten Ultraschall-Schweißeinrichtung zunächst zu einem nach unten verschlossenen Sack ausgebildet.

Hierzu weist die Ultraschall-Schweißeinrichtung eine Sonotrode 3 und einen Amboss 4 auf. Die Sonotrode hat eine glatte, dem Amboss gegenüberliegend ausgebildete Stirnseite. Diese Stirnseite verläuft parallel zu der Längserstreckung des Seitenfaltenschlauches 1. Auf der anderen Seite des Seitenfaltenschlauches 1 befindet sich ein zweiteiliger Amboss 4 bestehend aus einem Verschließamboss 4a und einem Trennamboss 4b. Die Ambossteile 4a, 4b sind verschieblich gegeneinander gelagert und stützen sich mit ihren benachbarten Seitenflächen aneinander ab. Hierdurch wird die Verschiebebewegung der Teile gegeneinander geführt. Aufgrund dieser Ausgestaltung befindet sich der Trennamboss 4b unmittelbar benachbart zu dem Verschließamboss 4a.

Der Verschließamboss 4a hat eine sich parallel zu der Stirnseite der Sonotrode 3 erstreckende Druckfläche 5. Diese ist - wie der Figur 2 deutlich zu entnehmen ist - von sich diagonal kreuzenden Nuten 6 durchsetzt.

Der Trennamboss 4b ist in Richtung auf die Sonotrode 3 nach Art einer Klinge spitz zulaufend ausgebildet.

Mit dem in den Figuren 1 und 2 gezeigten Ausführungsbeispiel wird aus einem Endlosschlauch 1 ein zunächst unten verschlossener Stückgutsack gebildet. Wie bereits vorstehend erwähnt, wird eine vorbestimmte Länge des Endlosschlauches 1 an der Ultraschall-Schweißeinrichtung 2 in Richtung des Pfeils F vorbei gefördert. Danach wird der Endlosschlauch 1 durch Klemmen zwischen der Sonotrode 3 und dem Amboss 4 in der Ultraschall-Schweißeinrichtung fixiert. Dabei wird der Endlosschlauch 1 zwischen der Druckfläche 5 und der Stirnseite der Sonotrode 3 geklemmt. Ein in der Sonotrode 3 erzeugter Ultraschall-Impuls führt zu einem Verschließen des Endlosschlauches 1 in an sich bekannter Weise. Unmittelbar im Anschluss hierzu wird der Trennamboss 4b relativ zu dem Verschließamboss 4a auf die Sonotrode 3 hin verschoben. Dabei kann der Trennamboss 4b die Sonotrode 3 zusammen mit dem verschlossenen Endlosschlauch 1 nach oben und von dem Verschließamboss 4a weg fördern. Jede andere Relativbewegung zwischen den beiden Ambossteilen, die dazu führt, dass nicht mehr der Verschließamboss 4a, sondern der Trennamboss 4b den Endlosschlauch 1 gegen die Sonotrode 3 klemmt, ist jedoch denkbar.

In der in Figur 1b gezeigten Stellung wird erneut ein weiterer Ultraschall-Impuls in der Sonotrode 3 erzeugt. Dieser Impuls ist vorzugsweise ein anderer als der beim Verschließen erzeugte Impuls. Insbesondere im Hinblick auf eine hohe Standzeit des der Sonotrode 3 zugeordneten Generators ist es zu bevorzugen, bei diesem Verfahrensschritt eine geringere Frequenz und Frequenzdauer in der Sonotrode 3 zur Wirkung zu bringen. Durch diesen zweiten Ultraschall-Impuls wird das Schlauchmaterial 1 geschnitten, und zwar unmittelbar am Rand einer mittels Ultraschweißen hergestellten Schweißnaht 7. Damit ist das vorbestimmte, unten verschlossene und zu einem Schüttgutsack gebildete Längenstück des Endlosschlauches 1 von dem zugeführten Endlosschlauch 1 mittels Ultraschweißen abgetrennt.

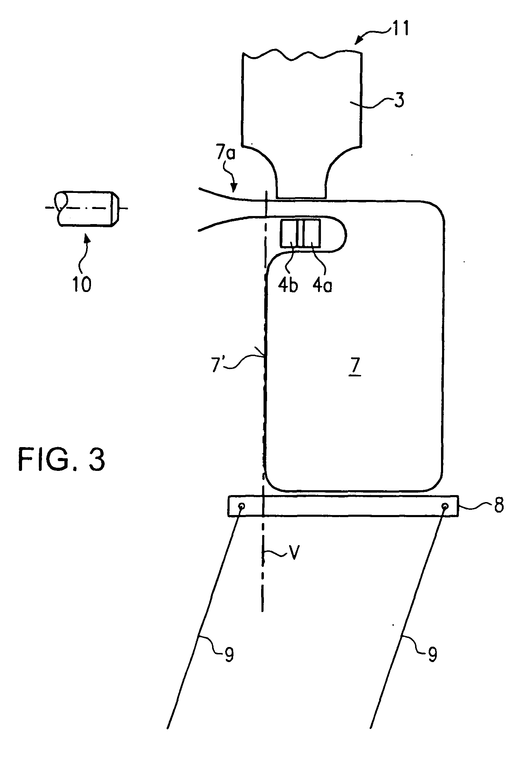

Figur 3 zeigt eine schematische Seitenansicht eines vorkonfektionierten Schüttgutsackes 7, der durch nicht dargestellte seitliche Stützen aufrecht stehend auf einer Stütz- und Ableitplatte 8 angeordnet ist. Diese Stütz- und Ableitplatte 8 ist über schematisch dargestellte Gelenkarme 9 eines Parallelogrammaufbaus abgestützt, wie dies in dem DE-U-295 15 852.2 der hiesigen Anmelderin offenbart ist.

In Figur 3 ist ferner ein Füllstutzen 10 einer nicht näher gezeigten Fülleinrichtung dargestellt. Auf diesen Füllstutzen 10 wird der Ventilsack 7 mit seinem Ventil 7a aufgeschoben. Hierbei befindet sich die Stütz- und Ableitplatte 8 in einer gegenüber der Darstellung in Figur 3 im Gegenuhrzeigersinn verschwenkten Position. Im Anschluss an die Füllung des Ventilsackes 7 über den Füllstutzen 10 wird die Stütz- und Ableitplatte 8 zusammen mit dem Ventilsack 7 in die in Figur 3 gezeigte Endstellung verbracht. Hierbei wird - wie in DE-U-295 15 852 beschrieben - der Ventilsack 7 sowohl leicht angehoben als auch parallel zu der Längserstreckung des Füllstutzens 10 von diesem weg bewegt.

In Figur 3 ist ferner eine Schweißeinrichtung 11 gezeigt, welche eine Sonotrode 3 sowie einen zweiteiligen Amboss 4 mit Verschließamboss 4a und Trennamboss 4b aufweist. Die Schweißeinrichtung ist vorzugsweise an der Fülleinrichtung befestigt und gegenüber dieser beweglich gelagert, so dass die Schweißeinrichtung 11 nach dem Abziehen des Ventilsackes 7 zur Einwirkung an das Ventil 7a gebracht werden kann. Bei dem gezeigten Ausführungsbeispiel ist die Schweißeinrichtung 11 derart beweglich, dass der Amboss 4 in Richtung auf den Ventilsack 7 hinter einer an die stutzenseitige Längsseite 7' des aufrecht stehenden Ventilsackes angelegten Vertikalen V befindlich ist. Mit anderen Worten befindet sich die Schweißeinrichtung 11 über der Grundfläche des Ventilsackes 7. In dieser Position kommt die Schweißeinrichtung zur Einwirkung. Dabei werden zunächst die Sonotrode 3 und der Verschließamboss 4a aufeinander zugefahren. Das Ventil 7a des Ventilsackes wird zwischen dem Verschließamboss 4a und der Sonotrode 3 geklemmt. Dann wird ein erster Ultraschallimpuls erzeugt. Hierdurch wird der Ventilsack 7 im Bereich des Ventils 7a verschlossen. Der Trennamboss 4b fährt auf die Sonotrode 3 zu und klemmt den von der derart gebildeten Schweißnaht nach außen abstehenden Rest des Ventils 7a gegen die Sonotrode 3. Dann wird der Verschließamboss 4a von der Sonotrode 3 weggefahren. Die Sonotrode 3 verharrt ortsfest in ihrer Lage. Mit einem weiteren Ultraschallimpuls wird das von der Schweißnaht abstehende Material des Ventils 7a abgetrennt, und zwar unmittelbar am Rand der vorher gebildeten Schweißnaht. Schließlich wird der derart verschlossene Ventilsack 7 von der Stützt- und Ableitplatte abgeworfen, beispielsweise auf ein Förderband und die Schweißeinrichtung 11 in eine Ruhestellung bewegt, um das Ansetzen des nächsten Ventilsackes an den Füllstutzen 11 nicht zu behindern.

Bei dem in Figur 3 beschriebenen Ausführungsbeispiel befindet sich die Trennstelle des abgetrennten Ventils 7a hinter der Vertikalen V und überragt daher nicht die durch die Seitenflächen des gefüllten aufrecht stehenden Sackes 7 gebildete Umhüllende des Sackes 7. Hierdurch wird verhindert, dass ein die Umhüllende überragendes Teil des Ventils 7a sich beim automatischen Transport mit Förderbändern in diesen verfängt. Ferner wird das schlauchförmige Ventil 7a unmittelbar benachbart zu der Schweißnaht abgeschnitten. Von der Schweißnaht stehen daher keine Innenflächen des Ventils 7a ab, an denen sich Partikel des bei der Formfüllung durch das Ventil 7a in den Ventilsack 7 eingefüllten Schüttgutes anhaften können. Es wird dementsprechend sicher verhindert, dass von der verschlossenen Verpackungseinheit Partikel abstauben, was insbesondere bei toxischen Partikeln oder Farbpigmenten zu bevorzugen ist.

### Bezugszeichenliste

- 1: Seitenfaltenschlauch
- 2: Ultraschall-Schweißeinrichtung
- 3: Sonotrode
- 4: Amboss
- 4a: Verschließamboss
- 4b: Trennamboss
- 5: Druckfläche
- 6: Nuten
- 7: Ventilsack
- 7a: Ventilstutzen
- 7': Längsseite des Ventilsacks
- 8: Stütz- und Ableitplatte
- 9: Gelenkarme
- 10: Füllstutzen
- 11: Ultraschweißeinrichtung

## Patentansprüche

1. Vorrichtung zum Ausbilden einer aus einem Endlosschlauch gebildeten Verpackungseinheit oder zum Verschließen einer vorkonfektionierten Verpackungseinheit, insbesondere eines Schüttgutsackes, mit einer Ultraschall-Schweißeinrichtung (2) umfassend einen Amboss (4) und eine Sonotrode (3), die aufeinander zu beweglich sind, und einer Einrichtung zum Positionieren des zu verschweißenden Schlauchmaterials (1) zwischen Amboss (4) und der Sonotrode (3)
**dadurch gekennzeichnet,**
**dass** der Amboss zwei Ambossteile (4a, 4b) umfasst, die gegeneinander in Richtung auf die Sonotrode (3) beweglich sind und von denen das eine Ambossteil als Verschließamboss (4a) und das andere Teil als Trennamboss (4b) ausgebildet ist.

2. Vorrichtung nach Anspruch 1, **dadurch gekennzeichnet, dass** die beiden Ambossteile im wesentlichen als plattenförmige Bauteile ausgebildet sind und dass die Ambossteile mit ihren benachbarten Längsseiten aneinander liegen.

3. Vorrichtung nach Anspruch 1 oder 2, **dadurch gekennzeichnet, dass** der Trennamboss (4b) in Richtung auf die Sonotrode (3) spitz zulaufend ausgebildet ist.

4. Vorrichtung nach einem der vorherigen Ansprüche, **dadurch gekennzeichnet, dass** der Verschließamboss (4a) eine sich parallel zu der Stirnseite der Sonotrode erstreckende Druckfläche (5) aufweist, welche von sich diagonal kreuzenden Nuten (6) durchsetzt ist.

5. Vorrichtung nach einem der vorherigen Ansprüche, **dadurch gekennzeichnet, dass** der Verschließamboss (4a) als sich über die gesamte Schweißlänge erstreckendes einteiliges Bauteil ausgebildet ist.

6. Vorrichtung nach einem der vorherigen Ansprüche, **dadurch gekennzeichnet, dass** sowohl die Sonotrode (3) als auch der Amboss (4) aufeinander zu beweglich sind.

7. Vorrichtung nach einem der vorherigen Ansprüche mit einem Füllstutzen (10) zum Befüllen eines ein Ventil (7a) aufweisenden Ventilsackes (7) mit einem Sackstuhl (8) zum Haltern des aufrechtstehenden, auf den Füllstutzen (10) aufgeschobenen Ventilsackes (7) und einer Einrichtung zum Abschieben des aufrechtstehenden Ventilsackes (7) von dem Füllstutzen (10), **dadurch gekennzeichnet, dass** die Ultraschweißeinrichtung (11) in Abschieberichtung des Ventilsackes (7) derart vor dem vorderen Ende des Füllstutzens (10) angeordnet werden kann, dass das von dem Ventilsack (7) seitlich abstehende Ventil (7a) auf oder in Richtung auf den Ventilsack (7) hinter einer an die Längsseite (7') des aufrecht stehenden Ventilsackes (7) angelegten Vertikalen (V) verschweißt und das freie, abstehende Ende des Ventils (7a) abgetrennt wird.

8. Vorrichtung nach Anspruch 7, **dadurch gekennzeichnet, dass** die Ultraschweißeinrichtung (11) beweglich relativ zu dem Füllstutzen (10) angeordnet ist.

9. Verfahren zum Ausbilden einer aus einem Endlosschlauch gebildeten Verpackungseinheit oder zum Verschließen einer vorkonfektionierten Verpackungseinheit, insbesondere eines Schüttgutsackes, durch Verwendung der Vorrichtung nach Anspruch 1, bei dem die Verpackungseinheit zumindest einseitig mittels Ultraschallschweißen verschlossen wird, und das von der Schweißnaht abstehende Materials des Endlosschlauches oder der Verpackungseinheit unmittelbar benachbart zu oder in der Schweißnaht abgetrennt wird
**dadurch gekennzeichnet,**
**dass** das abstehende Material mittels eines Ultraschall-Impulses abgetrennt wird, und
**dass** beim Abtrennen ein Trennamboss (4b) und beim Verschweißen ein Verschließamboss (4a) unter Zwischenlage des Materials gegen eine Sonotrode (3) gedrückt wird, die sowohl für das Verschweißen als auch für das Abtrennen verwendet wird.

10. Verfahren nach Anspruch 9, bei dem die vorkonfektionierte Verpackungseinheit durch einen Ventilsack (7) gebildet ist, der ein von dem aufrecht stehenden Ventilsack seitlich abstehendes Ventil (7a) aufweist, **dadurch gekennzeichnet, dass** das abstehende Ventil (7a) an einer Stelle abgetrennt wird, die auf oder in Richtung auf den Ventilsack (7) hinter einer an die Längsseite des aufrecht stehenden Ventilsackes (7) angelegten Vertikalen (V) liegt.

## Claims

1. An apparatus for forming a packaging unit consisting of an endless hose or for sealing a prefabricated packaging unit, in particular a bag for loose material, comprising an ultrasonic welding device (2) including an anvil (4) and a sonotrode (3), which are movable towards each other, and a means for positioning the hose material (1) to be welded between the anvil (4) and the sonotrode (3),
**characterized in that**
the anvil comprises two anvil parts (4a, 4b) which are movable relative to one another in the direction of the sonotrode (3), one of said anvil parts being implemented as a sealing anvil (4a) and the other part being implemented as a separating anvil (4b).

2. An apparatus according to claim 1, **characterized in that** the two anvil parts are essentially implemented as plate-shaped components, and that the anvil parts abut on one another with their neighbouring longitudinal sides.

3. An apparatus according to claim 1 or 2, **characterized in that** the separating anvil (4b) is implemented such that it tapers in the direction of the sonotrode (3).

4. An apparatus according to one of the preceding claims, **characterized in that** the sealing anvil (4a) is provided with a pressure surface (5) extending parallel to the end face of the sonotrode, diagonally intersecting grooves (6) being distributed over said pressure surface (5).

5. An apparatus according to one of the preceding claims, **characterized in that** the sealing anvil (4a) is implemented as an integral component extending over the whole welding length.

6. An apparatus according to one of the preceding claims, **characterized in that** both the sonotrode (3) and the anvil (4) are adapted to be moved towards each other.

7. An apparatus according to one of the preceding claims, comprising a filler neck (10) for filling a valve bag (7) provided with a valve (7a), a bag seat (8) for holding the upright valve bag (7) which has been pushed onto the filler neck (10), and a means for removing the upright valve bag (7) from the filler neck (10), **characterized in that,** when seen in the direction of removal of the valve bag (7), the ultrasonic welding device (11) can be arranged before the front end of the filler neck (10) in such a way that the valve (7a) projecting laterally beyond the valve bag (7) is welded on a vertical (V) applied to the longitudinal side (7') of the upright valve bag (7), or behind said vertical (V) when seen in the direction of the valve bag (7), and the free, projecting end of the valve (7a) is cut off.

8. An apparatus according to claim 7, **characterized in that** the ultrasonic welding device (11) is arranged such that it is movable relative to the filler neck (10).

9. A method for forming a packaging unit consisting of an endless hose or for sealing a prefabricated packaging unit, in particular a bag for loose material, by use of the apparatus according to claim 1, wherein the packaging unit is sealed by means of ultrasonic welding on at least one side thereof, and the material of the endless hose or of the packaging unit projecting beyond the weld is cut off directly adjacent to or in said weld,
**characterized in**
**that** the projecting material is cut off by means of an ultrasonic pulse, and
**that** during cutting off a separating anvil (4b) and, during welding, a sealing anvil (4a) is pressed against a sonotrode (3) with the material being interposed, the sonotrode being used for both welding and cutting off.

10. A method according to claim 9, wherein the prefabricated packaging unit consists of a valve bag (7) having a valve (7a) which laterally projects beyond the upright valve bag, **characterized in that** the projecting valve (7a) is cut off at a point located on a vertical (V) applied to the longitudinal side of the upright valve bag (7), or behind said vertical (V) when seen in the direction of the valve bag (7).

## Revendications

1. Dispositif pour former une unité d'emballage à partir d'un tube sans fin ou pour fermer une unité d'emballage préfabriquée, en particulier un sac pour produit en vrac, avec un dispositif de soudage à ultrasons (2) qui comprend une enclume (4) et une sonotrode (3) aptes à être déplacées l'une vers l'autre, et avec un dispositif pour positionner le matériau à souder (1) entre l'enclume (4) et la sonotrode (3),
**caractérisé en ce que** l'enclume comprend deux parties (4a, 4b) qui sont aptes à être déplacées en sens inverse en direction de la sonotrode (3), l'une étant conçue comme une enclume de fermeture (4a) et l'autre comme une enclume de séparation (4b).

2. Dispositif selon la revendication 1, **caractérisé en ce que** les deux parties d'enclume sont conçues essentiellement comme des éléments de construction en forme de plaques et **en ce qu'**elles sont placées l'une contre l'autre avec leurs côtés longitudinaux voisins.

3. Dispositif selon la revendication 1 ou 2, **caractérisé en ce que** l'enclume de séparation (4b) va en s'effilant en pointe vers la sonotrode (3).

4. Dispositif selon l'une des revendications précédentes, **caractérisé en ce que** l'enclume de fermeture (4a) présente une surface de pression (5) qui s'étend parallèlement au côté frontal de la sonotrode et qui est traversée par des rainures (6) qui se croisent en diagonale.

5. Dispositif selon l'une des revendications précédentes, **caractérisé en ce que** l'enclume de fermeture (4a) est conçue comme un élément de construction d'une seule pièce qui s'étend sur toute la longueur de soudage.

6. Dispositif selon l'une des revendications précédentes, **caractérisé en ce que** la sonotrode (3) et l'enclume (4) sont toutes les deux aptes à se déplacer l'une vers l'autre.

7. Dispositif selon l'une des revendications précédentes, comportant une tubulure de remplissage (10) pour le remplissage d'un sac à valve (7) pourvu d'une valve (7a), un support de sac (8) pour tenir le sac à valve (7), placé à la verticale, qui est enfilé sur la tubulure de remplissage (10), et un dispositif pour écarter le sac vertical (7) de la tubulure de remplissage (10),
**caractérisé en ce que** le dispositif à ultrasons (11) peut être disposé devant l'extrémité avant de la tubulure de remplissage (10), dans le sens d'écartement du sac à valve (7), de telle sorte que la valve (7a) qui dépasse latéralement du sac (7) soit soudée sur une verticale (V) appliquée contre le côté longitudinal (7') du sac (7) placé à la verticale ou derrière ladite verticale, en direction du sac (7), et que l'extrémité saillante libre de la valve (7a) soit séparée.

8. Dispositif selon la revendication 7, **caractérisé en ce que** le dispositif de soudage à ultrasons (11) est disposé pour pouvoir se déplacer par rapport à la tubulure de remplissage (10).

9. Procédé pour former une unité d'emballage à partir d'un tube sans fin ou pour fermer une unité d'emballage préfabriquée, en particulier un sac pour produit en vrac, à l'aide du dispositif selon la revendication 1, selon lequel l'unité d'emballage est fermée au moins sur un côté par soudage par ultrasons et le matériau du tube sans fin ou de l'unité d'emballage qui dépasse de la soudure est séparé tout près de la soudure ou dans la soudure,
**caractérisé en ce que** la matière qui dépasse est séparée à l'aide d'une impulsion d'ultrasons et **en ce qu'**on appuie contre une sonotrode (3) une enclume de séparation (4b), lors de la séparation, et une enclume de fermeture (4a), lors du soudage, en plaçant entre la matière entre sonotrode (3) et enclume (4), laquelle sonotrode sert aussi bien au soudage qu'à la séparation.

10. Procédé selon la revendication 9, selon lequel l'unité d'emballage préfabriquée est formée par un sac à valve (7) comportant une valve (7a) qui dépasse latéralement du sac placé à la verticale, **caractérisé en ce que** la valve (7a) qui dépasse latéralement est séparée à un endroit qui se trouve sur une verticale (V) appliquée contre le côté longitudinal du sac (7) placé à la verticale, ou derrière ladite verticale, en direction du sac (7).
